# EUROPEAN PATENT APPLICATION

(11) **EP 1 445 772 A1**
(43) Date of publication of application: **11.08.2004**
(21) Application number: 03795405.4
(22) Date of filing: 11.09.2003
(51) Int. Cl.: G11B 20/10, G11B 20/14, G11B 7/007, G06F 12/14, H04L 9/24

(54) **INFORMATION RECORDER, INFORMATION RECORDING METHOD, OPTICAL RECORDING MEDIUM, AND INFORMATION PROCESSOR**

(30) Priority: 13.09.2002 JP 2002267968
(71) Applicant: Sony Corporation, Tokyo 141-0001 (JP)
(72) Inventor: HORIGOME, Toshihiro, c/o Sony Corporation, Tokyo 141-0001 (JP); KOBAYASHI, Seiji, c/o Sony Corporation, Tokyo 141-0001 (JP)
(74) Representative: Melzer, Wolfgang, Dipl.-Ing.
(86) International application number: PCT/JP2003/011652
(87) International publication number: WO 2004/025646

(57) **Abstract**

Copyright protection information, which is recorded on an optical recording medium, is made not to be easily cracked, so that the profits of copyright owners are protected.

Signals based on a plurality of sequences obtained by scrambling copyright protection information SA by using a plurality of binary sequences are recorded in a predetermined area of an optical recording medium (2). Since the copyright protection information SA cannot be decrypted as long as the plurality of binary sequences used for scrambling are not known, an encryption process can be performed by using the information as a key. Furthermore, during playback, the copyright protection information SA is decrypted by performing a correlation computation with the played back signal by using a plurality of binary sequences, which are the same as those used for scrambling the data during the recording of the copyright protection information SA. Then, the encryption performed on the recorded information is unscrambled using the information.

## Description

### Technical Field

The present invention relates to technology for effectively protecting the profits of copyright owners with regard to authored works in which content data is recorded on a recording medium.

### Background Art

Various kinds of devices using optical recording media, for example, disc apparatuses for music purposes using a disc-shaped recording medium having a diameter of 64 mm can simply and easily copy music data from various content while preventing the deterioration of the sound quality, and thus they have been rapidly becoming popular in recent years. That is, in this type of apparatus, it is possible to record music information distributed by using a network communication such as the Internet to a recordable disc and to test-listen it, or it is possible to record music information of a borrowed compact disk (CD) to a disc and to test-listen it. Furthermore, by performing a conversion from digital signals into analog signals, music data recorded on another disc can be copied to another disc.

However, whereas such simple and easy copying can considerably increase the convenience for a user, there is a risk that the profits of copyright owners who create the music may be lost. For this reason, for example, in organizations and forums, such as RIAA (Recording Industry Association of America), SDMI (Secure Digital Music Initiative), and CPTWG (Copy Protection Technical Working Group), various techniques have been considered for the purpose of protecting the profits of copyright owners.

As one of such techniques, a method in which music information is encrypted using unique copyright protection information and the hidden information is recorded on a recording medium has been proposed. That is, according to this method, when music information is copied onto another recording medium, since the copyright protection information differs in the recording medium, the encryption applied to the original recording information cannot be unscrambled or becomes difficult to unscramble. As a result of the above, unlimited copies are prevented from being made so as to protect the profits of copyright owners.

As such methods for recording copyright protection information, for example, a method in which a sector to which access by a user is difficult is provided on a disc and copyright protection information is recorded on this sector, a method in which a reflection film is partly removed with respect to the recording of main data by pit sequences and copyright protection information is recorded in the form of bar codes (International Publication 97/14144 pamphlet), and other methods have been proposed.

The conventional methods are not sufficient in practical terms from the viewpoint of effectively protecting the profits of copyright owners, and illegal activity (copying, etc.) based on decrypted copyright protection information becomes a problem.

For example, in a method in which a sector to which access by a user is difficult is provided on a disc and copyright protection information is recorded on the disc, whereas the copyright protection information can be recorded relatively simply and easily, there is a problem in that the copyright protection information is likely to be copied illegally.

Furthermore, in the method in which a reflection film is partly removed and copyright protection information is recorded in the form of bar codes, when the copyright protection information is found by reading the bar codes using a microscope, there is the possibility that an illegal copy is made, and there is a problem in that so-called pirated versions cannot be completely prevented.

The present invention has been made in view of the above points. An object of the present invention is to make copyright protection information not to be easily cracked so as to protect the profits of copyright owners.

### Disclosure of Invention

In order to solve the above-described problems, the information recording apparatus and the information recording method according to the present invention record a signal based on a plurality of sequences, which are obtained by scrambling digital information for protecting copyright by using a plurality of binary sequences.

The optical recording medium according to the present invention has recorded thereon a signal based on a plurality of sequences in which digital information is scrambled to protect copyright using a plurality of binary sequences.

Therefore, according to these aspects of the present invention, the digital information for protecting copyright, which is recorded on the recording medium, has a form of being irregularly changed as a result of being scrambled in accordance with a plurality of binary sequences. As a result, it is difficult to analyze the digital information for protecting copyright as long as the plurality of binary sequences used for scrambling are not known.

The information recording apparatus according to the present invention reconstructs digital information for protecting copyright by performing a correlation computation between a binary sequence and a played back signal associated with the optical recording medium by using the same plurality of binary sequences as those used for scrambling the information when the digital information for protecting copyright is recorded.

Therefore, according to the present invention, digital information for protecting copyright, which is recorded on the optical recording medium, can be reliably detected. Moreover, since, to reconstruct the digital information for protecting copyright, the plurality of binary sequences, which are used when the digital information is recorded, are required, it is possible to prevent the digital information for protecting copyright from being illegally decrypted. That is, since the digital information for protecting copyright is recorded by a signal that changes according to the plurality of binary sequences, it is difficult to analyze the digital information for protecting copyright as long as the plurality of binary sequences used for recording are not known.

### BRIEF DESCRIPTION OF THE DRAWINGS

Fig. 1 illustrates the overview of steps of manufacturing an optical recording medium according to the present invention.
Fig. 2 shows a master disc of the optical recording medium according to the present invention.
Fig. 3 is a configuration view showing an example of a master disc exposure apparatus for the optical recording medium according to the present invention.
Fig. 4 is a block diagram showing an example of the configuration of a modulation circuit in the master disc exposure apparatus of Fig. 3.
Fig. 5 is a timing chart illustrating the operation of the modulation circuit shown in Fig. 4.
Fig. 6 is an illustration schematically showing a state in which copyright protection information is recorded as a groove wobble in a recording medium.
Fig. 7 is a block diagram showing as an example a modulation circuit having a configuration differing from that of Fig. 4.
Fig. 8 is an illustration showing the overview of a recording and playback system in the present invention.
Fig. 9 is a block diagram showing an example of the configuration of an information processing apparatus using the optical recording medium according to the present invention.
Fig. 10 is a block diagram showing an example of the configuration of a second decryption circuit (decryption circuit for copyright protection information) shown in Fig. 9.

### Best Mode for Carrying Out the Invention

The present invention relates to an information recording apparatus for a recording medium (for example, a recording apparatus for an optical recording medium) and a recording method, and an information processing apparatus using a recording medium (a recording and playback apparatus, etc.). For example, the present invention can be applied widely to a system such as a recordable and playable disc (MD) for music uses and a digital video recorder (DVR) capable of recording and playing back video information. In the present invention, to effectively protect the profits of copyright owners, the bits of copyright protection information regarding copyright protection are each scrambled by a plurality of binary sequences generated at a predetermined timing, and the signals of the plurality of sequences generated by scrambling are recorded on a recording medium.

Examples of a data recording form associated with the optical recording medium include an information recording method using light radiation, such as a laser beam, and an information recording method using electronic-ray radiation (regarded as the likeliest as the next generation recording method).

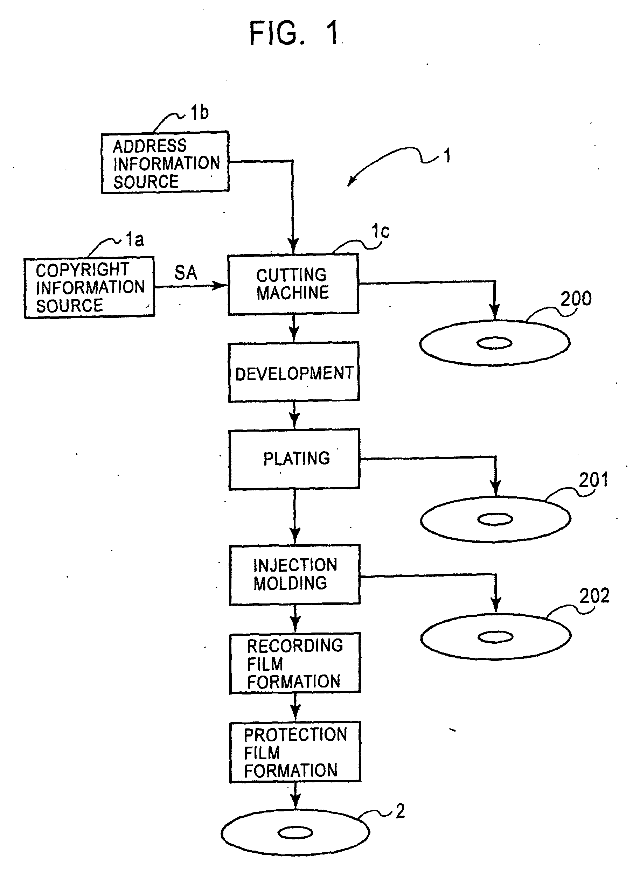

Fig. 1 illustrates the steps of manufacturing an optical recording medium according to the present invention.

Regarding an optical recording medium, the recording form, a recording medium material, and a shape thereof do not matter. In the following, a description is given by using a disc for music uses having a diameter of 64 mm as a disc-shaped recording medium (hereinafter referred to simply as a "disc"). This disc is produced in such a manner that a recording film, a protection film, etc., are formed on optical disc substrates, which are manufactured in duplicates in mass production using a stamper. Furthermore, in this example, it is assumed that discs are sold to users after copyright protection information (hereinafter referred to as "SA") before shipment from the factory is recorded in advance on all the discs, and the copyright protection information SA is recorded as wobble (meandering) information of a groove on the disc.

Here, the "copyright protection information" means information (digital information) for protecting copyright, which is associated with content data to be recorded on the recording medium. For example, as will be described later, the copyright protection information is used as key information for encryption (this is not limited to an encryption process in a narrow sense, but includes a scrambling process). Not being limited to this, usage does not matter, for example, the copyright protection information may be used as copying control information for prohibiting or limiting illegal copying.

In the example shown in Fig. 1, an information recording apparatus (optical recording apparatus) 1 includes a copyright information source 1a, an address information source 1b, and a cutting machine (master disc exposure apparatus) 1c.

The copyright protection information SA output from the copyright information source 1a and an address signal output from the address information source 1b using an address format signal generation circuit are supplied to the cutting machine 1c. The cutting machine 1c generates an optical modulation signal by performing signal processing on the copyright protection information SA, as will be described later, and radiates a recording laser beam modulated in accordance with the optical modulation signal onto an optical master disc 200, causing the copyright protection information SA to be recorded as a groove wobble in the inner region of the optical master disc 200.

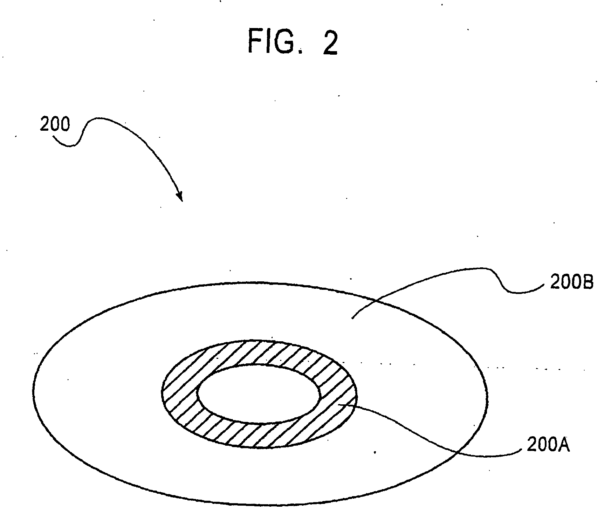

The recording of the copyright protection information by the cutting machine 1c is performed in a copyright information recording area 200A in the inner region of the disc (see Fig. 2). The reason for this is that, in an ordinary optical disc, signal recording is performed in such a manner that reading of information proceeds from the inner region toward the outer region. That is, since the copyright protection information needs to be completely reproduced before information such as content is played back from a disc or before information is recorded on the disc, the recording of the copyright protection information at a position of the inner region of the disc is often more convenient. Of course, even in the form in which recording is performed in the outer region, an intermediate region, etc., of the disc, no particular problem is posed other than the access time. Furthermore, not being limited to one place of the disc, the copyright protection information may be recorded at a plurality of positions of the disc by considering a disc manufacturing error and the occurrence of a scratch, etc., due to use (however, in either cases, it is required that, which position of the disc the copyright protection information is recorded be clearly specified, or the position information of the copyright protection information be obtained using some kind of means).

The cutting machine 1c records address information and information of a groove for tracking in a user data recording area 200B even if the laser beam moves to the outer region of the copyright information recording area 200A. The optical master disc 200, on the entire surface of which the exposure and recording are performed in this manner, is developed, and thereafter, it is formed as a stamper 201 after undergoing a plating process. The stamper 201 is mounted in an injection molding machine, and disc substrates 202, which are duplicated in mass production, are produced.

Then, a recording film (a magneto-optical film or a phase change film) is deposited on the disc substrate 202 by using a sputtering apparatus, etc.

In the manner described above, the disc substrate 202 such that the copyright protection information SA is recorded in the copyright information recording area in the inner region of the disc is finally coated with a protection film, completing an optical recording medium 2 (in this example, a music disc), and this is passed to a user. Since the data recorded on the disc is recorded after it is encrypted in accordance with the copyright protection information SA, a general user unscrambles the encryption in accordance with the copyright protection information recorded in the copyright information recording area within the disc in order to play back data or records information encrypted in accordance with the copyright protection information on the disc (the details will be described later).

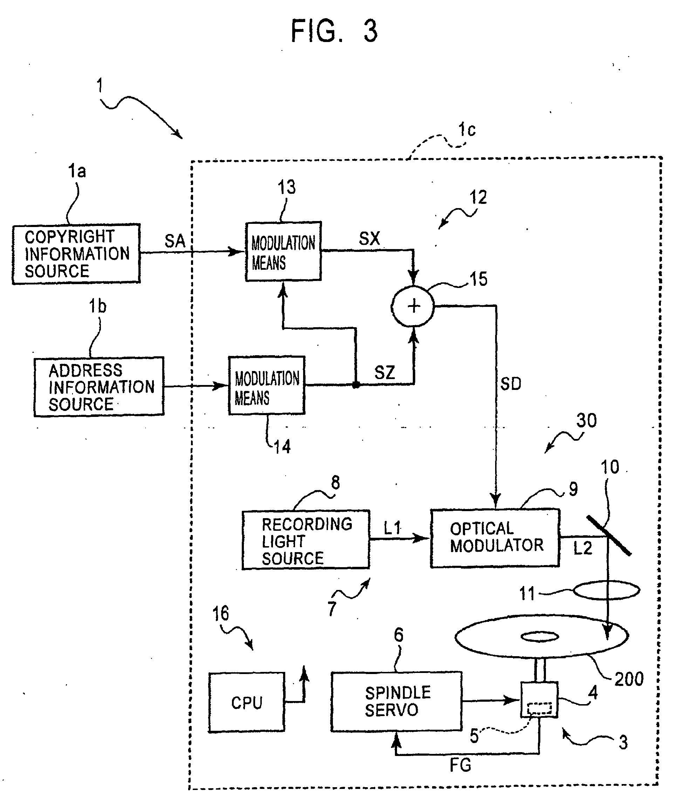

Fig. 3 shows the essential portion of an example of the configuration of the cutting machine 1c.

The cutting machine 1c includes a driving source and mechanism, and rotation control means 3 for rotating the optical master disc 200.

The optical master disc 200 is rotationally driven by a spindle motor, which is a driving source 4. In the bottom part within the spindle motor, a signal generator (FG) 5 is provided, so that an FG signal (detection signal) whose signal level rises for each predetermined rotational angle is output.

A spindle servo control section 6 performs the driving control of the spindle motor so that the frequency of the FG signal supplied from the spindle motor becomes a predetermined frequency. This causes the optical master disc 200 to be rotationally driven at a predetermined number of rotations.

An optical radiation system 7 for the optical master disc 200 includes a recording light source 8, a light modulator 9, and optical devices such as a mirror 10 and an objective lens 11.

In this example, a laser light source (recording laser) is used as the recording light source 8, and a laser beam L1 is emitted to the light modulator 9. For the recording laser, for example, a gas laser is used.

The light modulator 9 is formed using an acousto-optical deflector, etc., and causes the traveling direction of the laser beam L1 from the recording laser to change in accordance with an optical modulation signal (denoted as an "SD") and emits this beam as a laser beam L2.

The mirror 10 is provided to change the optical path of the laser beam L2 and causes the beam light to be reflected toward the optical master disc 200. Then, the objective lens 11 collects the light reflected from the mirror 10 onto the recording surface of the optical master disc 200. The change in the traveling direction of the laser beam L2, which is collected by the objective lens 11 in this manner, is replaced with the position displacement on the recording surface of the optical master disc 200, and exposure is performed. The optical-system forming devices including the mirror 10 and the objective lens 11 are moved as desired along the radial direction of the disc in synchronization with the rotation of the optical master disc 200 by a sled mechanism (movement mechanism) (not shown).

By displacing the light collection position of the laser beam L2, for example, from the inner region toward the outer region in the radial direction of the optical master disc 200, tracks can be formed in a spiral shape on the optical master disc 200. In the copyright information recording area 200A shown in Fig. 2, a groove on which wobbling (for example, meandering) corresponding to both the copyright protection information SA and the address information is performed is formed on the tracks within the area. Furthermore, in the user data recording area 200B shown in Fig. 2, a groove in which the address information is recorded is formed.

The copyright protection information SA supplied from the copyright information source 1a and the information from the address information source 1b are processed in a signal processing section 12.

The copyright protection information SA is supplied to a modulation means (modulation circuit) 13, where modulation (to be described later) is performed on the copyright protection information SA in order to generate a modulation signal (hereinafter referred to as a "copyright modulation signal" and denoted as an "SX") by referring to the address signal (hereinafter denoted as an "SZ") supplied from the address information source 1b through a modulation means (modulation circuit) 14, and this signal is supplied to superposition means 15.

The signal from the address information source 1b contains address information required for positioning and various kinds of format information, and the signal is supplied to the modulation means 14 having a low-pass filter. The modulation means 14 is formed using an address format signal generation circuit and so on. The modulation means 14 attenuates a signal of high frequency components contained in the input signal so that only low frequency components required as address information and format information are transmitted to generate the address signal SZ, and supplies the signal to the modulation means 13 and the superposition means 15. During the playback of the signal recorded on the recording medium, it is necessary to separate the modulation signal by the modulation means 13 from the modulation signal by the modulation means 14. In this example, in order that frequency separation be possible, in the modulation means 14, frequency modulation is used (a process for generating and inserting a synchronization signal required when the address information is played back is also included.).

The superposition means 15 superposes the respective modulation signals obtained by the modulation means 13 and 14. For example, the copyright modulation signal SX supplied from the modulation means 13 and the address signal SZ supplied from the modulation means 14 are added together, and the added result is output as the optical modulation signal SD to the optical modulator 9.

Although not shown in the figure, the superposition means 15 includes the components described below.
- Frequency adjusting means for adjusting the frequency components of the modulation signal SX or SZ, or both the modulation signals.
- Addition means for adding modulation signals (SX, SZ), which are output through the frequency adjusting means.

In the frequency adjusting means, for example, adjustments are performed so that the frequency associated with one of the modulation signals is "f" hertz or higher and the frequency associated with the other modulation signal is lower than "f" hertz. In order to convert the frequency, the signal (original signal) having a frequency of "a" hertz is multiplied by a sine wave having a frequency of "b" hertz. As a result, since signal components of a sum frequency (a + b) and a difference frequency (a - b) are obtained, desired signal components are obtained by using an appropriate high-pass filter (HPF) and low-pass filter (LPF). If the original signal has a desired frequency distribution from the beginning, such a process needs not to be performed.

Furthermore, at the stage before the addition by the addition means, since it is assumed that each signal is separated in frequency, by adding the two signals, frequency multiplexing is performed. That is, after the modulation signals SX and SZ are frequency multiplexed, the signal is finally recorded on the optical recording medium.

From the viewpoint of secrecy, generally speaking, CDMA (Code Division Multiple Access) is more advantageous than frequency multiplexing, but frequency multiplexing is preferred from the viewpoint of simplification of the circuit configuration.

A control section 16 formed using a CPU (Central Processing Unit), a memory, and so on centrally controls the entire system. For example, the control section 16 supplies timing information and control information necessary for the circuit sections which form the modulation means 14 and so on by referring to the position at which exposure is being performed on the optical master disc 200 (the radiation position of the laser light in the radial direction of the disc).

The copyright protection information SA is used as, for example, key information for encryption, which is used when the user records data on the completed disc, and any desired random number can be used therefor. In another usage, SA can be used as information for specifying the manufacturing source when an illegal disc is distributed in the market. For example, by using, as SA, the apparatus number unique to the cutting machine, information associated with the manufacturing factory, and information such as the manufacturing year and date, necessary data may be recorded on the disc.

In this example, in order to prevent the complexity, the signal line of the copyright protection information SA, which extends from the copyright information source 1a toward the modulation means 13, is indicated by one thick line. However, the copyright protection information SA generally has information of a plurality of bits (for example, in the description to be given later, since SA is formed as 4-bit information, it is formed by four signal lines in the figure). Of course, an increased amount of information by increasing the number of bits is preferable in that a larger number of pieces of information can be recorded.

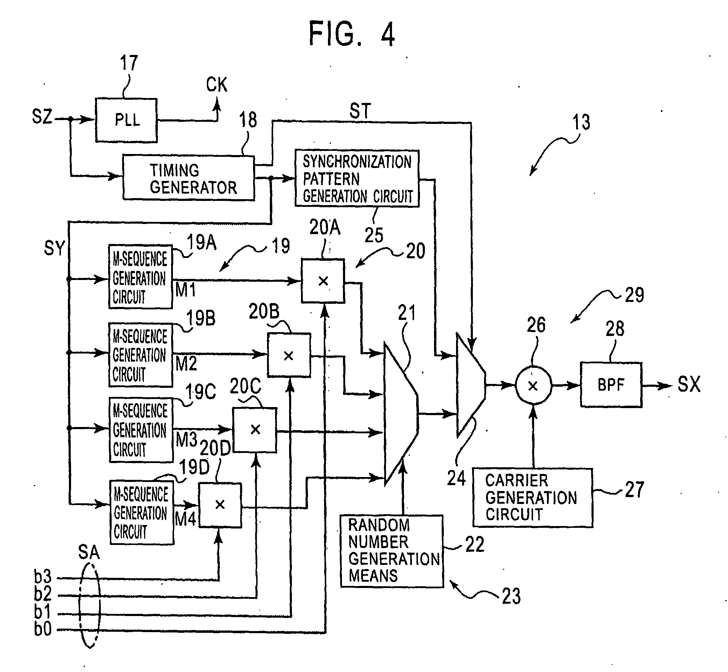

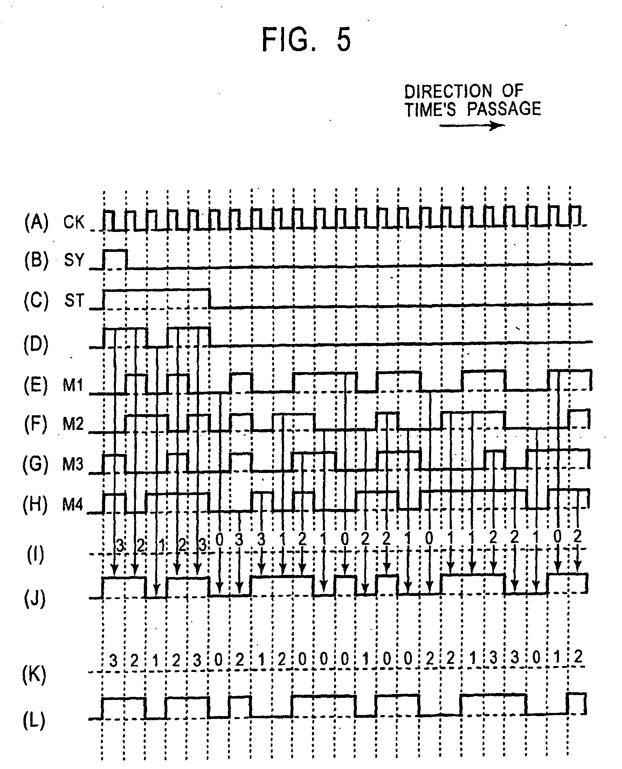

In the following, the configuration and the operation timing of the modulation means 13 are described with reference to Figs. 4 and 5. Fig. 4 is a block diagram showing an example of the configuration of a circuit. Fig. 5 is an operation illustration including timing charts.

The address signal SZ input to the modulation means 13 is sent to a PLL (phase-locked loop) circuit 17 and a timing generator 18.

The PLL circuit 17 generates a channel clock "CK" (see Fig. 5(A)) synchronized with the address signal SZ, and supplies the clock to the sections of the circuit.

The timing generator 18 detects a synchronization signal contained in the address signal SZ and counts the channel clock "CK" at a predetermined timing, thereby generating an initialization pulse "SY" (see Fig. 5(B)). As shown in Fig. 5, this initialization pulse "SY" is a pulse that indicates a logic value "1" at one clock width (for one period of CK) (in Fig. 5, the initialization pulse SY for only one pulse is shown, but in practice, the initialization pulse SY is repeatedly generated at a predetermined period). Furthermore, the initialization pulse SY is used to initialize M-sequence generation circuits (19A to 19D) (to be described later).

As binary-sequence generation means 19 for generating a plurality of binary sequences at a predetermined timing, in this example, M-sequence generation circuits 19A, 19B, 19C, and 19D are used. Here, the "predetermined timing" means a timing based on synchronization signal detection, as will be described later. Furthermore, for a plurality of random-number sequences, since the sequences are preferably in an orthogonal relationship (that is, the relationship that the cross-correlation is zero) or close to that relationship, an M sequence (Maximal Length Sequence) is used as a binary sequence. The M sequence is a random-number sequence having a specific period, from which random-number sequences having no cross-correlation are obtained by a number corresponding to the sequence length. Furthermore, a pseudo-random number can be obtained by a relatively simple circuit configuration. The number of the M-sequence generation circuits corresponds to the number of bits associated with the copyright protection information SA (4 in this example).

When a binary sequence other than the M sequence is used, it is necessary that the same signal (the signal of a pseudo-random number sequence) be always generated repeatedly starting from the initialization time (the position at which the synchronization signal is detected). Then, during playback, it is required that the signal sequence can be generated at the same timing as that during recording (that is, the requirement is that the signal sequence for scrambling be known in advance or the reproduction method be known). Examples thereof include a method of making the cross-correlation completely zero by using a signal sequence of a sine wave and a cosine wave, whose frequencies differ from each other. However, in this method, a specific frequency is assigned to each bit associated with the information, and strong frequency characteristics are given. Consequently, for example, in the case of an optical disc, there is a risk that an influence due to the degree of the inclination of the disc during playback, the change in the shape of a reading laser spot, etc., affects the change of the frequency characteristics of a read signal (played back signal) (the information of a particular bit cannot be correctly detected, etc.). Therefore, in order to avoid such problems, it is preferable that the frequency space be uniformly used for each bit by using a pseudo-random number such as an M sequence. As a result, even if specific frequency components slightly vary during playback, the load involved with the variation can be uniquely distributed over all the bits rather than on specific bits.

The M-sequence generation circuits 19A to 19D generate pseudo-random number sequences, which differ from each other (hereinafter denoted as M1, M2, M3, and M4), each time the channel clock "CK" changes from a low level to a high level, and outputs individual sequence data to digital multiplication circuits 20A to 20D correspondingly. That is, the signal output from the M-sequence generation circuit 19x (x indicates one of A, B, C, and D) is sent to the digital multiplication circuit 20x (x indicates one of A, B, C, and D).

The digital multiplication circuits 20A to 20D constitute computation means 20 for outputting a computation result of a plurality of bits associated with the copyright protection information SA (digital information) and a plurality of binary sequences by the binary-sequence generation means 19.

In this example, the pseudo-random number sequences M1 to M4 are M sequences that change in units of the channel clock CK, and the M-sequence generation circuits 19A to 19D are initialized in accordance with the initialization pulse "SY" from the timing generator 18. In an example, the pseudo-random number sequence M1 is shown in Fig. 5(E), the pseudo-random number sequence M2 is shown in Fig. 5(F), the pseudo-random number sequence M3 is shown in Fig. 5(G), and the pseudo-random number sequence M4 is shown in Fig. 5(H). For the pseudo-random number sequences M1 to M4, for example, the same M sequences each having a different initial value may be used.

The digital multiplication circuits 20A to 20D digitally multiply the pseudo-random number sequences M1 to M4 by the bits (b0 to b3) of the copyright protection information SA. That is, the digital multiplication circuit 20A computes the exclusive OR of the pseudo-random number sequence M1 and the lowest bit "b0" of the copyright protection information SA, and outputs the computation result to selection means (data selector) 21. In a similar manner, the other digital multiplication circuits 20B to 20D perform identical computations with respect to the pseudo-random number sequences M2 to M4 and the bits b1 to b3 of the copyright protection information SA, and outputs the computation result to the selection means 21. That is, the exclusive OR of the pseudo-random number sequence M2 and the bit "b1" of the copyright protection information SA is calculated in the digital multiplication circuit 20B; the exclusive OR of the pseudo-random number sequence M3 and the bit "b2" of the copyright protection information SA is calculated in the digital multiplication circuit 20C; and the exclusive OR of the pseudo-random number sequence M4 and the highest bit "b3" of the copyright protection information SA is calculated in the digital multiplication circuit 20D. Then, all the computation results are sent to the selection means 21.

For the computation performed in the computation means 20, exclusive OR or its negative logic computation (logical NOT of exclusive OR) is most appropriate. The reason for this is a problem that, in computations such as logical sum (OR) and logical product (AND), information cannot be correctly detected when the information (SA) (to be described later) is reconstructed or the detection takes a long time.

In this example, the selection means (data selector) 21 together with random number generation means 22 constitutes integration means 23, and generates an integration signal by integrating a plurality of computation results obtained by the computation means 20.

A 2-bit random number generated by a circuit which forms the random number generation means 22 (random number generation circuit) is supplied to the selection means 21, and the selection means 21 selects one of the computation results from the computation means 20 in accordance with the value of the random number.

The random number generation circuit is a circuit for generating a true random number or a pseudo-random number. It is preferable that the true random number be generated, and the advantage that the secrecy is increased by an amount corresponding to that the sequence does not have a periodicity. However, from the viewpoint of the simplification of the configuration, a pseudo-random number generation circuit can be used instead. Examples of the circuit configuration for generating a random number include a circuit for amplifying electrical noise and for performing digitization (A/D conversion) thereon. Furthermore, examples of the circuit configurations for generating a pseudo-random number include a configuration in which data of a random-number sequence, which is generated using a signal generation circuit for an M sequence or a random number generation function provided as a library function in a computer is prestored in storage means such as a ROM (Read Only Memory), and a random number is generated by reference to the data. Examples of the advantages of using the pseudo-random number sequence include the items described below.
· Capability of generating a stable random-number sequence with a relatively simple circuit (a random number, which is deviated due to some conditions, is not generated, and the reliability of characteristics is ensured.)
· Can be easily formed as a digital circuit, can be easily contained in a single chip, and the risk that the random-number sequence is revealed by external analysis is low.

The random number generated by the random number generation means 22 changes in units of the channel clock CK and takes one of the values of the four numerals "0, 1, 2, and 3". The selection means 21 selects one of the four inputs supplied from the digital multiplication circuits 20A to 20D in accordance with the 2-bit random number supplied from the random number generation means 22, and outputs the result to the data selector 24 at a subsequent stage. For example, when the value of the random number supplied from the random number generation means 22 is "0", the output of the digital multiplication circuit 20A is selected in the selection means 21. In the following, similarly, the selection of the output of the digital multiplication circuit in accordance with the random number value is performed as described below.
· When the random number value is "1" ==> the output of the digital multiplication circuit 20B is selected.
· When the random number value is "2" ==> the output of the digital multiplication circuit 20C is selected.
· When the random number value is "3" ==> the output of the digital multiplication circuit 20D is selected.

The output of the digital multiplication circuit selected by the selection means 21 is output to the data selector 24, where a selection is performed with respect to another signal.

A synchronization pattern signal (see Fig. 5(D)) from a synchronization pattern generation circuit 25 is supplied to the data selector 24. The synchronization pattern generation circuit 25 is provided to generate a synchronization pattern signal in accordance with a signal from the timing generator 18. For example, as shown in Fig. 5, a synchronization pattern signal at the logic (positive logic) level of "11011" is generated in synchronization with (the rise of) the initialization pulse "SY" supplied from the timing generator 18, and this signal is output to the data selector 24.

Furthermore, a signal from the timing generator 18 (hereinafter referred to as a "copyright synchronization pattern selection signal", and denoted as "ST") is supplied to the data selector 24. As shown in Fig. 5(C), the copyright synchronization pattern selection signal ST rises at the same time as the rise of the initialization pulse SY and whose logic level (logical value) becomes "1" for only the period of a 5-clock (CK) width.

In the data selector 24, one of the output signal of the synchronization pattern generation circuit 25 and the output signal of the selection means 21 is selected in accordance with the copyright synchronization pattern selection signal ST. That is, while the logic level of the copyright synchronization pattern selection signal ST is "1", the output of the synchronization pattern generation circuit 25 is selected. While the logic level of the copyright synchronization pattern selection signal ST is "0", the output of the selection means 21 is selected. Therefore, a signal portion containing a synchronization pattern of "11011" appears periodically in the output of the data selector 24, and during that period, a signal selected randomly by the selection means 21 is contained.

In order to describe the output signal of the data selector 24, which is obtained in the above-described manner, in Fig. 5, the output (random number value) of the random number generation means 22 is shown in Fig. 5(I), and the output signal of the data selector 24 in a case where all the values of 4-bit information b0 to b3 associated with the copyright protection information SA are assumed to be zero is shown in Fig. 5(J). In Fig. 5, signals shown in parts (A) to (H) are as described below.
- (A) => CK (channel clock)
- (B) => SY (initialization pulse)
- (C) => ST (copyright synchronization pattern selection signal)
- (D) => synchronization pattern signal
- (E) => M-sequence signal (M1)
- (F) => M-sequence signal (M2)
- (G) => M-sequence signal (M3)
- (H) => M-sequence signal (M4)

As is clear from Fig. 5, in the start 5-clock period by assuming the rise time of SY and ST as a starting point, the logic level of the copyright synchronization pattern selection signal ST is "1", and the synchronization pattern "11011" appears as it is as the output of the data selector 24. However, from the sixth clock (CK), since the logic level of the copyright synchronization pattern selection signal ST becomes "0", a signal which is irregularly changed, which is selected by the selection means 21 in accordance with the output of the random number generation means 22, is obtained.

For example, in the sixth clock, the output level of the random number generation means 22 is "0". In this case, since the selection means 21 selects a sequence of M1, the data "0", which is the same as that of the sixth clock of the sequence, is output from the selection means 21. Similarly, in the seventh clock, the output of the random number generation means 22 is "3". In this case, since the selection means 21 selects a sequence of M4, the data "0", which is the same as that of the seventh clock of the sequence, is output from the selection means 21. In this manner, when the output of the random number generation means 22 is denoted as "j" (j = 0, 1, 2, and 3), a sequence of Mk (k = j + 1) is selected. Consequently, one of the four pseudo-random number sequences M1 to M4 is selected and output by the selection means 21. As a result, a signal such as that shown in Fig. 5(J) is obtained in the output of the data selector 24.

Figs. 5(K) and 5(L) show examples of outputs of the data selector 24 in a case where the output of the random number generation means 22 differs from that of Fig. 5(I). Fig. 5(K) shows a random-number sequence by the random number generation means 22. Fig. 5(L) shows an output signal of the data selector 24.

It is assumed also in this example that all the values of the 4-bit information b0 to b3 of the copyright protection information SA are "0". As described above, the M-sequence generation circuits 19A to 19D are repeatedly reset periodically in accordance with the initialization pulse SY, and generate the same pseudo-random number sequences M1 to M4 each time thereof. However, since the random number generation means 22 is not reset even by the initialization pulse SY, in this example, a random-number sequence (see Fig. 5(K)) completely differing from that of Fig. 5(I) is output from the random number generation means 22. As a result, even in the case of the same pseudo-random number sequences M1 to M4, the selection result in the selection means 21 differs from that of Fig. 5(J). That is, it is understood from a comparison between Fig. 5(L) and Fig. 5(J) that a completely different signal waveform is formed excluding the start 5-clock portion indicating the synchronization pattern signal ("11011").

The copyright protection information SA recorded in this manner is recorded in such a manner that the probability of the position displacement of the groove changes by a position relative to the synchronization pattern. Therefore, by performing a computation such that the probability of the position displacement of the groove is determined in accordance with the position relative to the synchronization pattern, the copyright protection information SA can be detected (the details will be described later.).

The initialization of the M-sequence generation circuit is preferably performed in accordance with the address information of the disc at a timing at which the synchronization signal appears or at a timing delayed with a particular fixed delay time from the time when the synchronization signal appears. That is, in the address signal SZ, the signal detecting synchronization signal is buried, and this synchronization signal has no problem of secrecy and is recorded as a signal of a large amplitude (signal power) on the recording medium, making it easy to detect the signal during playback. Therefore, even when a signal containing the copyright protection information is superposed with a'relatively small amplitude (signal power), the signal is not conspicuous much. Therefore, by detecting the synchronization signal contained in the address signal and by initializing the binary sequence using the appearance timing of the signal, this can be used to reconstruct and play back the copyright protection information. Of course, in the application of the present invention, use is not limited to only such an address signal, and, for example, signals containing various kinds of information, such as information unique to the disc manufacturing business owner, recommended conditions during disc playback (conditions for an automatic adjustment circuit of a player), and sound recording (image recording) capable time, can be used.

In Fig. 4, the output signal of the data selector 24 is supplied to one of the input terminals of an analog multiplication circuit 26, and a carrier signal of a single frequency, which is generated by a carrier (carrier wave) generation circuit 27, is supplied to the other input terminal of the analog multiplication circuit 26. That is, the analog multiplication circuit 26 multiplies the output of the data selector 24 by the output of the carrier generation circuit 27 in an analog manner, causing the highfrequency components of the signal output from the data selector 24 to be shifted to higher frequencies, and the analog multiplication circuit 26 outputs the result to a band-pass filter (BPF) 28. The band-pass filter 28 allows only the output signal components of the data selector 24, which are shifted to higher frequencies by the analog multiplication circuit 26, to be passed, thereby generating the modulation signal (copyright modulation signal) SX.

The analog multiplication circuit 26, the carrier generation circuit 27, and the band-pass filter 28 constitute modulation means 29 for generating a modulation signal in accordance with the integration signal from the data selector 24. The carrier frequency by the carrier generation circuit 27 and the passing frequency band of the band-pass filter 28 are set so as to be different from the frequency band of the address signal SZ. As a result, frequency multiplexing of the copyright modulation signal SX and the address signal SZ becomes possible.

The copyright modulation signal SX obtained in the above-described manner is added together with the address signal SZ in the superposition means 15 shown in Fig. 3, and thereafter, the signals are sent to the optical modulator 9. The optical modulator 9 forms a wobble modulation means 30 for causing a track to wobble by performing radiation control of a laser beam onto the optical master disc 200. In accordance with the copyright modulation signal SX and the address signal SZ, the copyright protection information SA is recorded as a groove wobble on the optical master disc 200 in a form which is not easily decrypted. In this example, since a recording form using a laser beam is adopted, the mirror 10, the objective lens 11, and so on are required in addition to the optical modulator 9. However, these optical components are not indispensable for the configuration of the wobble modulation means 30. In a form in which optical components are not necessary, for example, in a recording form in which electronic rays are used, wobble modulation means is formed by an electronic-ray modulator. That is, in this case, instead of the recording light source (laser light source) 8, an electronic-ray generation source is used, and instead of the optical modulator 9, an electronic-ray modulator is used.

In the manner described above, in the present invention, signals based on a plurality of sequences obtained by scrambling the digital information by using a plurality of binary sequences are recorded on the optical recording medium. That is, a plurality of signals generated as computation results using a plurality of random-number sequences are finally collected as one signal. In the configuration of Fig. 4, one sequence is selected randomly from among a plurality of signal sequences. In this case, it is fine if the selection at each time is performed in such a way that the sequence becomes accurately random. However, if the same sequence is selected for a long time, this is undesirable from the viewpoint of information secrecy. Therefore, as described above, a random-number-like sequence is preferably used, and randomness is preferably ensured also when a signal sequence is selected.

The signal which is finally obtained from among a plurality of computation results is modulated and is subjected to necessary processing, and thereafter, it is recorded on the recording medium. As recording means required therefor, in the above-described example, the disc rotation control means 3, the optical radiation system 7, and the signal processing section 12 are provided.

Then, in the case of the present invention, the copyright modulation signal SX becomes a waveform which is different for each time with respect to exactly the same copyright protection information SA. As a result, the amount of the groove wobbling recorded on the disc becomes different for each time.

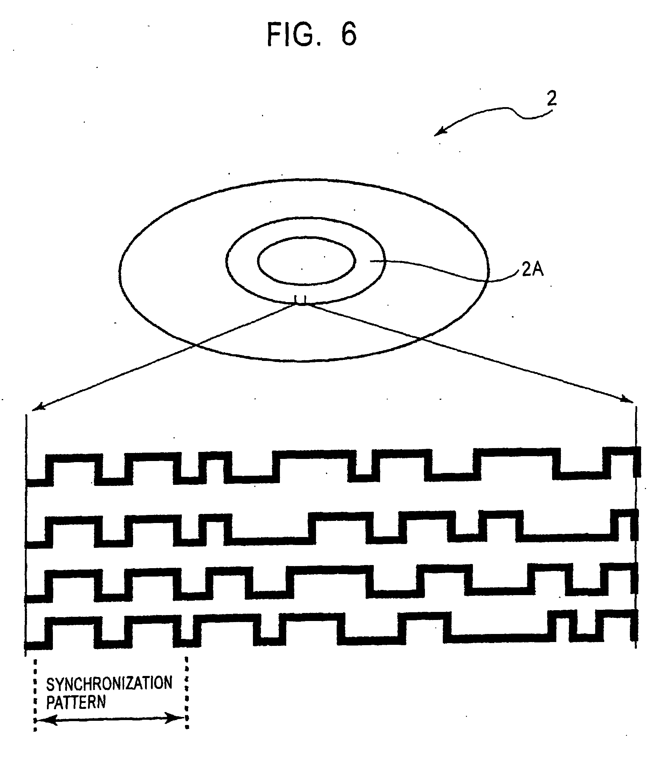

A schematic representation of such a state of wobbling is shown in Fig. 6. (However, in this figure, to conceptually facilitate understanding, it is shown assuming that the output of the data selector 24 is wobbled and recorded as it is. The wobbling of the grooves which are actually recorded exhibits a more complex aspect since influences of the address signal SZ and the carrier are added).

As shown in the figure, in a copyright information recording area 2A of the disk-shaped optical recording medium 2, the copyright protection information SA is recorded as a microscopic wobble pattern of a groove starting from the synchronization pattern.

Furthermore, in the figure, the wobble pattern of each groove indicates the same copyright protection information SA regardless of the fact that it is seen different for each track within the copyright information recording area 2A. That is, the recorded copyright protection information SA is recorded as the wobble information of the groove in such a manner that radiation control of a laser beam (or an electronic ray) is performed using a modulation signal based on an integration signal such that the plurality of bit sequences and the plurality of binary sequences are integrated (the copyright protection information SA is recorded on the disc as a signal based on the data scrambled by a random-number sequence). Therefore, even if the disc surface is observed using an electronic microscope and a pattern corresponding to that of Fig. 6 is confirmed, the meandering pattern of the recorded groove is generated randomly and cannot be easily decrypted. That is, by recording the copyright protection information SA on the disc by applying the present invention, since the information cannot be easily cracked, it is possible to make the work of producing so-called pirated versions more difficult.

The amount of information recorded on the copyright information recording area 2A needs to be determined by considering, for example, the conditions described below.
1. The number of recording bits of the copyright protection information
2. The size of the signal amplitude (the larger the amplitude, the shorter the recording interval is required. On the other hand, if the signal amplitude is too large, a risk arises in that the secrecy is degraded)
3. Variations in manufacturing of discs, and a scratch, etc., which occurs during handling after shipment
4. The length of one clock

Therefore, there are cases in which the amount of information for one track is sufficient, and it reaches several thousands or several ten thousands tracks.

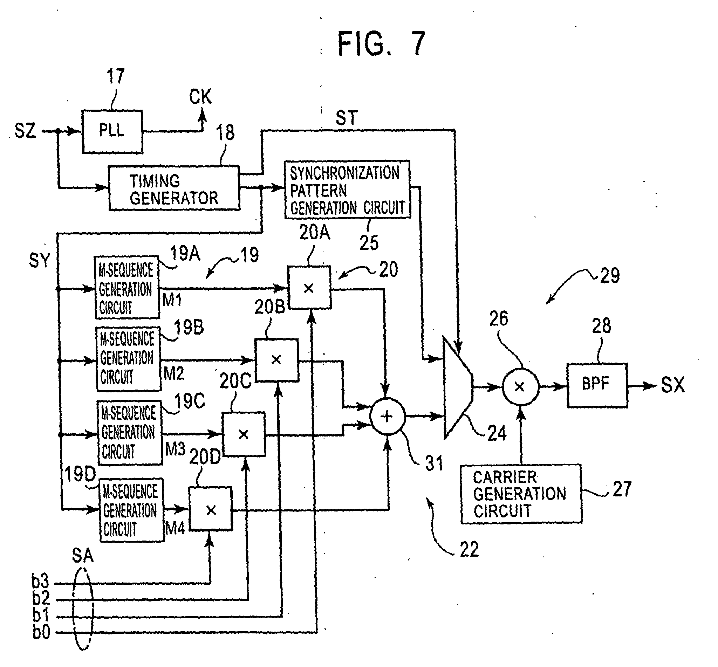

In the example of the configuration shown in Fig. 4, in the integration means 23, a random number or a pseudo-random number is generated, one of the plurality of computation results (the outputs of the digital multiplication circuits 20A to 20D) is selected in accordance with the random number or the pseudo-random number, and this is output as the integration signal. However, the integration means 23 is not limited to such a form. For example, as shown in Fig. 7, the construction may be formed in such a way that the integration signal is generated by providing addition means for adding a plurality of computation results by the computation means 20.

In the example shown in Fig. 7, the differences from Fig. 4 are that an addition circuit 31 is used as addition means in place of the selection means 21 and the random number generation means 22 (therefore, of the portions shown in Fig. 7, the same reference numerals as those which are already used are used for the portions which do not differ in the comparison with the configuration shown in Fig. 4, and accordingly, descriptions thereof are omitted.).

The outputs of the digital multiplication circuits 20A to 20D are input to the addition circuit 31, and the addition circuit 31 sends the output obtained by adding them to the data selector 24 at a subsequent stage.

Therefore, in the data selector 24, one of the synchronization pattern and the output of the addition circuit 31 is selected in accordance with the copyright synchronization pattern selection signal ST, and the selection result is sent to the analog multiplication circuit 26 of the modulation means 29.

In this example, since the addition result by the addition circuit 31 is a multi-valued signal, a process for recording and playing back the multi-valued signal is necessary. When the multi-valued signal is used, the generated signal becomes often more smooth than that of the form using a binary signal, and'the secrecy can be increased with regard to the copyright protection information hidden by superposition with the address signal.

A description will now be given below of an information processing apparatus for recording or playing back information by using an optical recording medium in which the copyright protection information SA is recorded. Examples of the apparatus include a disc information playback apparatus or recording apparatus, and an apparatus for recording and playing back disc information.

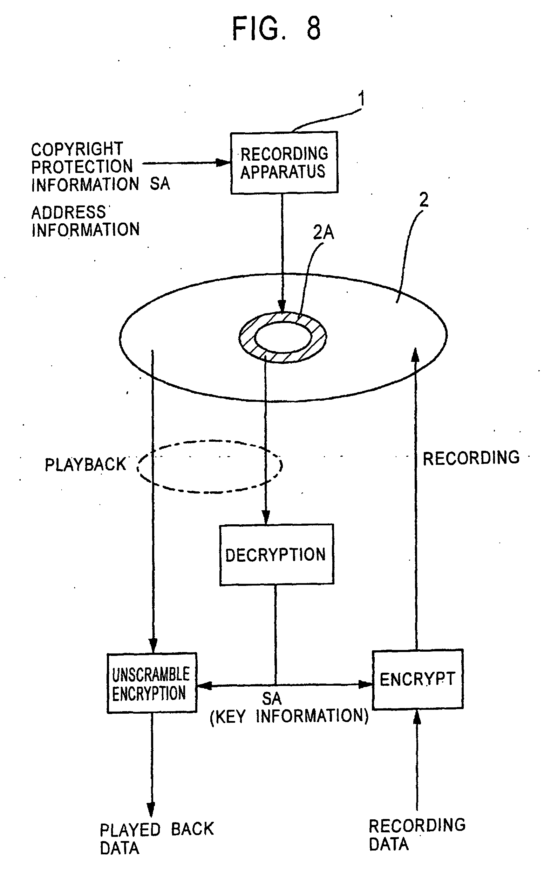

Fig. 8 is a schematic illustration of a system associated with recording and playback.

The copyright protection information SA is recorded in the copyright information recording area 2A of the optical recording medium 2 by using the information recording apparatus 1 (in this example, an optical recording apparatus).

During the data playback in the information processing apparatus, a correlation computation is performed between the signal of a sequence and a played back signal by using a plurality of binary sequences, which are the same as those used to scramble information when the copyright protection information SA is recorded, reconstructing the copyright protection information SA (decrypted). Since a secrecy process by encryption is performed on the played back signal by using the SA, the encryption which is performed during recording is unscrambled by using the decrypted copyright protection information SA, the original played back data is obtained.

During the data recording in the information processing apparatus, after recording data (user data) is encrypted using the copyright protection information SA, a process for recording onto the recording medium is performed after undergoing a modulation process suitable for recording onto the optical recording medium 2.

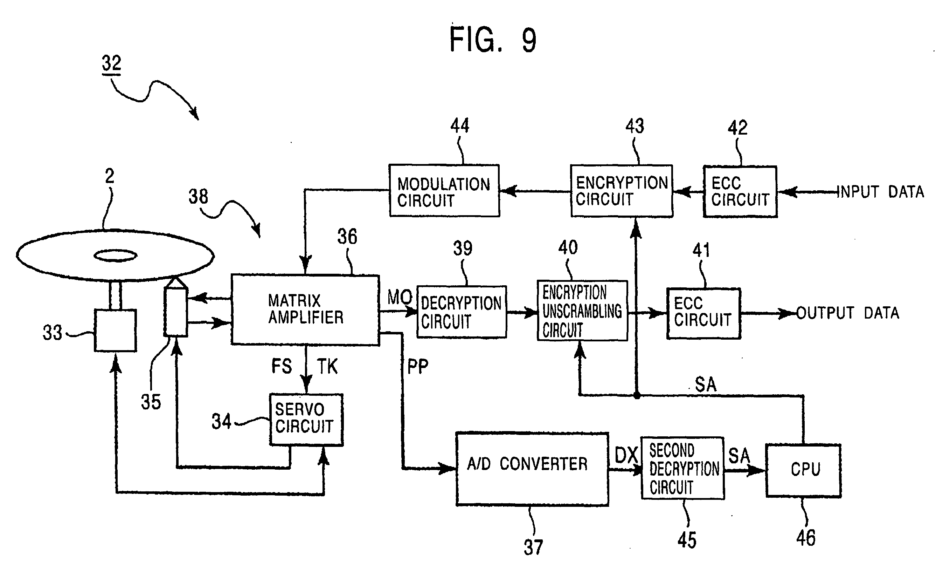

Fig. 9 shows an example of the configuration of an optical disc recording and playback apparatus for performing information recording and information playback onto an optical disc in which the copyright protection information SA and the address signal SZ are recorded.

On the optical recording medium 2 used in an information processing apparatus 32, as described above, signals based on a plurality of sequences obtained by scrambling the copyright protection information by using a plurality of binary sequences are recorded. Then, the disk-shaped optical recording medium 2 is rotated by a spindle motor, which is a driving source 33. The spindle motor is controlled in accordance with a signal from a servo circuit 34.

An optical pickup (or an optical head) 35 is controlled (tracking servo control and focusing servo control associated with objective lens driving, or sled control for changing the field of view position) so as to perform a predetermined operation by the optical pickup 35. A signal generated by the optical pickup 35 is sent to a matrix amplifier 36, where the signal is converted into a track error (or a tracking error) signal "TK", a focusing error signal "FS", a push-pull signal "PP", and a magneto-optical detection signal "MO". The track error signal "TK" and the focusing error signal "FS" are supplied to the servo circuit 34, where the signals are used for focus positioning control and tracking control associated with the objective lens of the optical pickup 35. Furthermore, the push-pull signal "PP" is a signal of the difference in the amounts of light (so-called radial push-pull signals) by a detector having two portions and is supplied to an A/D converter (analog/digital converter) 37, where the signal is used to detect the copyright protection information SA and the address information. Since these pieces of information are recorded as groove wobbles on the disc, a wobble signal can be generated by detecting the groove wobble. That is, the optical pickup 35 and the matrix amplifier 36 constitute wobble detection means 38.

The MO signal obtained in the matrix amplifier 36 is supplied to a decryption circuit 39, where user data recorded as a magneto-optical signal is decrypted. The decryption circuit 39 performs EFM (Eight to Fourteenth Modulation) demodulation from the supplied MO signal. The EFM-demodulated data is sent to an encryption unscrambling circuit 40. This encryption unscrambling circuit 40, together with a CPU (to be described later), constitutes encryption unscrambling means for unscrambling the encryption performed on the recorded information of the optical recording medium 2 so as to reconstruct the information. In this circuit, the information whose encryption based on the copyright protection information SA is unscrambled is supplied as signals in units of 8 bits to an ECC circuit 41.

The ECC circuit 41 corrects a code error contained in the output signal of the encryption unscrambling circuit 40 in accordance with the ECC (Error Correction Code) added in the coding during the recorded. Such errors are caused to occur by, for example, defects on the disc.

During the recording of data, the input user data is sent to an encryption circuit 43 through an ECC circuit 42. The encryption circuit 43, together with a CPU (to be described later), constitutes encryption means for encrypting recording information and for recording it onto the optical recording medium 2. In this circuit, data on which an encryption process based on the copyright protection information SA is performed is sent to a modulation circuit 44, where the data is modulated (is subjected to EFM). Then, the data is sent to the matrix amplifier 36, where a process for recording it on the disc is performed.

The data which is digitized by the A/D converter 37 is sent to a second decryption circuit 45, where a decryption process is performed on the data, and the copyright protection information SA obtained thereby is sent to a CPU (Central Processing Unit) 46. In order that the decrypted SA does not leak outside, care is necessary such that the SA is managed only within the integrated circuit such as an LSI, and such that, when the SA is to be transferred to the outside, it is transferred after mutual authentication is performed and a secrecy process such as encryption is performed.

A description will now be given of a case in which the copyright protection information SA is detected from the recorded information of the copyright information recording area 2A (see Fig. 6) on the disc. First, the CPU 46 gives instructions to the optical pickup 35, and in a state in which focusing servo and tracking servo associated with the driving of the objective lens are activated, the copyright information recording area 2A in the inner region of the disc is accessed. At this time, the copyright modulation signal SX and the address signal SZ, which are recorded as groove wobbles, are observed as the push-pull signal "PP".

In the A/D converter 37, the push-pull signal PP is converted into an 8-bit digital push-pull signal (denoted as "DX") in accordance with a clock (not shown), and this signal is supplied to the second decryption circuit 45. The second decryption circuit 45 decrypts the copyright protection information SA from the digital push-pull signal DX (the details will be described later), and outputs it to the CPU 46.

The CPU 46 outputs the copyright protection information SA supplied from the second decryption circuit 45 to the encryption unscrambling circuit 40. As described above, the encryption unscrambling circuit 40 unscrambles the encryption of the signals supplied from the decryption circuit 39 in accordance with the copyright protection information SA supplied from the CPU 46, and supplies them as signals in units of 8 bits to the ECC circuit 41.

In the disc on which the copyright protection information SA is correctly recorded in this manner, it is possible for the user to enjoy the music information recorded on the disc as a result of the encryption being correctly unscrambled in the encryption unscrambling circuit 40. On the other hand, on a disc on which the copyright protection information SA is not correctly recorded (an illegally copied disc, etc.), since the encryption unscrambling circuit 40 does not correctly operate, it is not possible for the user to enjoy the music information recorded on the disc. In this manner, on the disc on which the copyright protection information SA is not correctly recorded, since music playback is not performed, for example, the value of a pirated disc can be decreased considerably, and the widespread use of illegally copied discs can be prevented (as a result, the profits of copyright owners can be protected).

Furthermore, in the information processing apparatus 32, when the user newly records data on a disc, first, the ECC circuit 42 adds an error correction code to the input user data. After that, in the encryption circuit 43, encryption is performed in accordance with the copyright protection information SA from the CPU 46, and the modulation circuit 44 performs modulation such as EFM, and thereafter, sends the output to the matrix amplifier 36. Then, by using the optical pickup 35, information is recorded as a magnetic pattern on the disc by the magnetic head along with the radiation of a laser beam.

With regard to the user data recorded on the disc in this manner, an encryption process is always performed in accordance with the copyright protection information SA unique to the disc. Therefore, even if the user data on the disc is copied by improper means and is distributed as pirated discs, since the copyright protection information SA used as a key (encryption key) during encryption cannot be played back from the pirated disc, the encryption applied to the user data which is illegally copied on the pirated disc cannot be unscrambled. As a result, since the value of the pirated disc can be lowered considerably, the widespread use of pirated discs can be prevented, and as a result, the profits of copyright owners can be protected.

Next, the second decryption circuit 45 will be described.

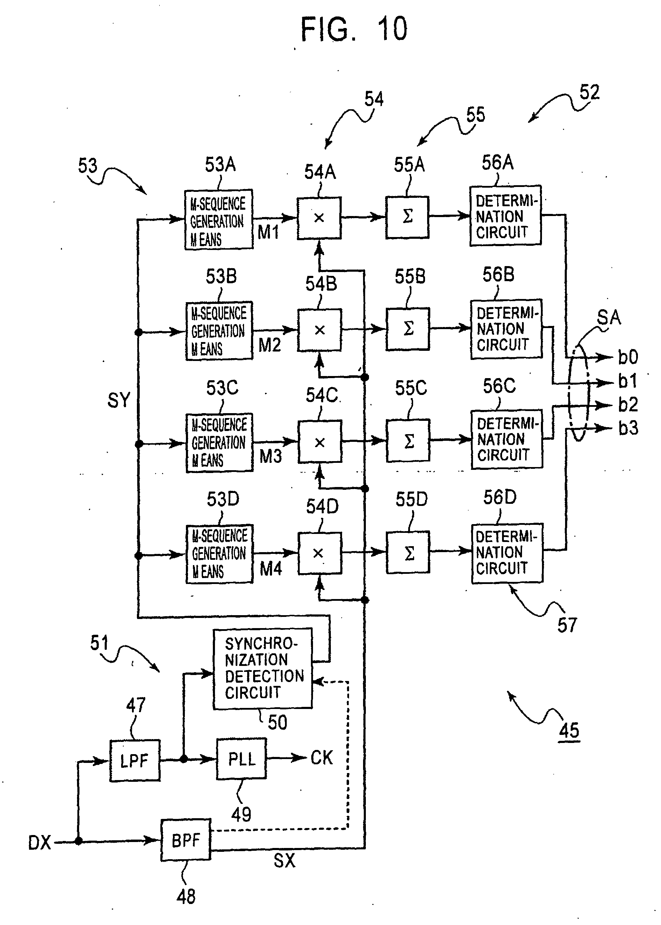

Fig. 10 is a block diagram showing an example of the configuration of the second decryption circuit.

As described above, the decryption of the copyright protection information SA is performed in accordance with the signal from the wobble detection means 38. In this example, the wobble detection means 38 is a push-pull detection means for detecting a push-pull signal (PP). The push-pull signal PP is sent from the matrix amplifier 36 to the A/D converter 37, where the push-pull signal PP is converted into a digital push-pull signal DX.

Then, this digital push-pull signal DX is input to a low-pass filter (LPF) 47 and a band-pass filter (BPF) 48.

The low-pass filter 47 is provided to extract and output the components of the address signal SZ by allowing only the low frequency components contained in the digital push-pull signal DX to be passed. Furthermore, the band-pass filter 48 extracts and outputs the components of the copyright modulation signal SX by extracting only the signal of the high frequency components contained in the digital push-pull signal DX.

The output of the low-pass filter 47 is sent to a PLL (phase-locked loop) circuit 49 and a synchronization detection circuit 50. The PLL circuit 49 plays back a clock synchronized with the address signal SZ, thereby producing and outputting the channel clock CK, which is the same as that used during recording, and supplies it to the sections of the second decryption circuit 45.

The synchronization detection circuit 50 is a circuit provided to detect a synchronization timing from the wobble signal. The synchronization detection circuit 50, together with the low-pass filter 47, constitutes synchronization detection means 51. That is, the synchronization detection circuit 50 detects the synchronization signal components contained in the address signal SZ, and outputs the initialization pulse SY at the same timing as that used during recording. That is, in this example, the synchronization detection means 51 is address detection means for detecting address information.

The initialization pulse SY is a pulse such that the logic level becomes "1" for a period of one clock, and it is output at the same timing as that shown in Fig. 5(B). That is, regarding the initialization timing, since the channel clock CK is reproduced by the PLL circuit 49 in the same way as during the recording, the timing can be measured by counting the CK by a predetermined number after the synchronization signal is detected.

Reconstruction means 52 for reconstructing the copyright protection information SA includes binary-sequence generation means 53, computation means 54, and decryption means 57.

M-sequence generation circuits 53A to 53D constitute the binary-sequence generation means 53 for generating a binary sequence in accordance with the synchronization timing based on the initialization pulse SY. That is, the M-sequence generation circuits 53A to 53D are initialized by the initialization pulse SY, generate pseudo-random number sequences M1 to M4 formed by M sequences, which are identical to those used in (the modulation means 13 of) the above-described information recording apparatus 1, and output them to digital multiplication circuits 54A to 54D correspondingly.

The digital multiplication circuits 54A to 54D constitute the computation means 54 for digitally multiplying the data of the pseudo-random number sequences M1 to M4 by the output data (SX) of the band-pass filter 48. That is, when the logic level of the pseudo-random number sequence M1 is "1", the digital multiplication circuit 54A inverts the polarity of the signal SX and outputs this signal to a digital integration circuit 55A. Furthermore, when the logic level of the pseudo-random number sequence M1 is "0", the digital multiplication circuit 54A outputs the signal SX as it is to the digital integration circuit 55A. That is, in the same way as during recording, a computation of exclusive OR (or logical NOT thereof) is performed.

The other digital multiplication circuits 54B to 54D perform the same computations as that of the digital multiplication circuit 54A with respect to the pseudo-random number sequences M2 to M4 and the output of the band-pass filter 48, and output the results to the digital integration circuits 55B to 55D (that is, assuming that "x = B, C, or D", the computation result of the M-sequence generation circuit 53x and the digital multiplication circuit 54x associated with each output of the BPF 48 is output to the digital integration circuit 55x.).

The digital integration circuits 55A to 55D forming the decryption means 57 integrate the values obtained as the computation results in the digital multiplication circuits 54A to 54D one after another, so that a computation for determining the probability of the groove position displacement in accordance with the relative position from the synchronization pattern is performed. As a result of performing integration in this manner, it is possible to reconstruct the information recorded as the copyright protection information SA by removing the influence of the random number used during the recording.

That is, in this example, the degree of correlation between the played back signal of the disc and each carrier signal (a plurality of binary-sequence signals). If components of a particular carrier (binary sequence) are contained as positive polarity in the played back signal, the degree of correlation indicates a large positive value. Furthermore, if the binary sequence is contained as the negative polarity (0 and 1 are inverted) in the played back signal, the degree of correlation indicates a large negative value. This makes it possible to determine as to whether "1" is recorded in each bit or "0" is recorded in each bit.

When the plurality of binary sequences recorded on the disc are in an orthogonal relationship, that is, when the cross-correlation is in a zero relation, even if components of a plurality of binary sequences are superposed in the played back signal, by determining the degree.of correlation between the played back signal and an arbitrary binary-sequence signal, only the intensity (polarity) of the desired binary-sequence components can be known by eliminating the influence of the other binary-sequence components. As described above, the reconstruction means 52 is none other than means for determining the degree of correlation between a plurality of binary sequences and the played back signal. Regarding the method for determining the degree of correlation, for example, in the case of an analog signal process, while two signals are being multiplied, the result may be integrated. Furthermore, as in this example, in the case of a binary signal, instead of multiplication, exclusive OR or reverse logic (NOT logic) thereof may be used.

The integration results in the digital integration circuits 55A to 55D are supplied to digital determination circuits 56A and 56D, respectively. The digital determination circuits 56A and 56D compare the input signal with a predetermined threshold value, thereby reconstructing and outputting the bits b0 to b3 of the copyright protection information SA. The digital multiplication circuits 54A to 54D and the digital integration circuits 55A to 55D are circuits for determining a correlation value (or a correlation coefficient) between the signal SX based on the played back signal from the disc and each carrier signal (a plurality of binary-sequence signals). Each correlation value takes a positive or negative value depending on the logic value of each bit. Therefore, the "predetermined threshold value" in the digital determination circuits 56A and 56D is zero (or at a zero level) in this case.

In the manner described above, in the decryption means 57, by integrating the wobble signal while performing a computation with a plurality of binary sequences M1 to M4, each bit of the copyright protection information SA is decrypted. That is, a plurality of integration means 55 for integrating each of the computation results of a plurality of different binary sequences and the wobble signal are provided, and by concurrently performing detection for each bit associated with the copyright protection information SA, decryption for each bit is performed.

In this manner, in this configuration, the clock used during the recording and four pseudo-random number sequences M1 to M4 are reproduced by using the synchronization pattern inserted into the address signal SZ, and the correlation integration between these and the played back signal (push-pull signal) detected from the optical pickup 35 is performed, making it possible to reconstruct the copyright protection information SA recorded on the disc.

The fact that the influence of a random number used during the recording can be removed by detection using integration has already been stated. Even in a case where a portion of a played back signal is lost due to defects which occur in disc manufacturing steps, or a scratch on the surface of the disc, which occur during handling of the disc, it is possible to reliably detect the copyright protection information SA by repeatedly performing integration computations.

In the above-described example of the configuration, a synchronization pattern buried in the address signal SZ is used to reproduce the initialization pulse SY. Alternatively, since the copyright synchronization signal is also buried in the copyright modulation signal SX, the signal can also be used. That is, in another configuration example, associated with the synchronization detection means 51, as indicated by the broken line in Fig. 10, the copyright synchronization signal contained in the output of the band-pass filter 48 may be detected, and the initialization pulse SY may be reproduced in synchronization with this detection. In this case, the output terminal of the band-pass filter 48 is connected to the synchronization detection circuit 50, and in the groove wobble recorded on the disc, the initialization pulse SY can be reproduced by detecting the fact that the synchronization pattern "11011" is repeatedly recorded at a predetermined period.

According to the above-described information processing apparatus 32, effective copyright protection can be realized by preventing illegal copying operation by control associated with encryption of user data or encryption unscrambling thereof, in which playback of the copyright protection information SA is possible and the copyright protection information SA is used as a key.

### Industrial Applicability

As is clear from the foregoing, according to the present invention, the copyright protection information is not easily found out as long as the plurality of binary sequences used for scrambling are not known. Therefore, the profits of copyright owners can be effectively protected.

According to the present invention, by recording signals based on copyright protection information as wobble information associated with the optical recording medium, the secrecy of information can be increased.

## Claims

1. An information recording apparatus for recording digital information for protecting copyright by radiation of light or by radiation of electronic rays onto a recording medium,
wherein a signal based on a plurality of sequences obtained by scrambling said digital information by using a plurality of binary sequences is recorded on the recording medium.

2. An information recording apparatus according to Claim 1, comprising:
binary-sequence generation means for generating a plurality of binary sequences at a timing based on synchronization detection;
computation means for outputting a computation result of a plurality of bits associated with said digital information, and said plurality of binary sequences;
integration means for integrating a plurality of , computation results obtained by said computation means in order to generate an integration signal;
modulation means for generating a modulation signal in accordance with said integration signal; and
wobble modulation means for making a track wobble by performing radiation control of a laser beam or an electronic ray onto the optical recording medium in accordance with said modulation signal.

3. An information recording apparatus according to Claim 1,
wherein said binary sequence is an M sequence.

4. An information recording apparatus according to Claim 2,
wherein said binary sequence is an M sequence.

5. An information recording apparatus according to Claim 2,
wherein said integration means comprises random number generation means for generating a random number or a pseudo-random number, and selection means for selecting and outputting one of said plurality of computation results in accordance with the random number or the pseudo-random number from the random number generation means.

6. An information recording apparatus according to Claim 2,
wherein said integration means generates said integration signal by adding a plurality of computation results by said computation means.

7. An information recording apparatus according to Claim 2,
wherein said computation means performs an exclusive OR computation of said digital information and said plurality of binary sequences.

8. An information recording apparatus according to Claim 2, comprising:
an information source for generating second digital information;
second modulation means for generating a second modulation signal in accordance with said second digital information; and
superposition means for superposing a first modulation signal obtained by said modulation means and said second modulation signal,
wherein said wobble modulation means performs wobbling under said radiation control of a laser beam or an electronic ray in accordance with the output of said superposition means.

9. An information recording apparatus according to Claim 8,
wherein said plurality of binary sequences are initialized at a timing based on a synchronization signal in said second modulation signal.

10. An information recording apparatus according to Claim 8,
wherein said superposition means adds the first modulation signal and the second modulation signal after the frequency components of said first modulation signal, said second modulation signal, or the two modulation signals are adjusted, thereby causing the two modulation signals to be frequency multiplexed.

11. An information recording apparatus according to Claim 8,
wherein said second digital information is address information used to access said optical recording medium.

12. An information recording method for recording digital information for protecting copyright by radiation of light or by radiation of an electronic ray onto a recording medium, said information recording method comprising:
a step of scrambling said digital information by using a plurality of binary sequences; and
a step of recording, on the recording medium, a signal based on a plurality of sequences obtained by the scrambling.

13. An information recording method according to Claim 12, comprising the steps of:
determining, after a plurality of binary sequences are generated at a timing based on synchronization detection, a plurality of computation results by a computation of a plurality of bits associated with said first digital information and said plurality of binary sequences;
integrating said plurality of computation results as an integration signal, and thereafter generating a modulation signal in accordance with the integration signal; and
making a track wobble by performing radiation control of a laser beam or an electronic ray onto an optical recording medium in accordance with said modulation signal.

14. An information recording method according to Claim 12,
wherein an M sequence is used as said binary sequence.

15. An information recording method according to Claim 13,
wherein an M sequence is used as said binary sequence.

16. An information recording method according to Claim 13,
wherein a random number or a pseudo-random number is generated, and one of said plurality of computation results is selected in accordance with the random number or the pseudo-random number and is used as an integration signal.

17. An information recording method according to Claim 13,
wherein said integration signal is generated by adding said plurality of computation results.

18. An information recording method according to Claim 13,
wherein a computation result is determined by performing an exclusive OR computation of said digital information and said plurality of binary sequences.

19. An information recording method according to Claim 13,
wherein second digital information is generated, and wobbling is performed by said radiation control of a laser beam or an electronic ray in accordance with a signal such that a second modulation signal based on the second digital information and the modulation signal based on said integration signal are superposed.

20. An information recording method according to Claim 19,
wherein said plurality of binary sequences are initialized at a timing based on a synchronization signal in said second modulation signal.

21. An information recording method according to Claim 19,
wherein the first modulation signal and the second modulation signal are frequency multiplexed by adding the first modulation signal and the second modulation signal after the frequency components of said first modulation signal, said second modulation signal, or the two modulation signals are adjusted.

22. An information recording method according to Claim 19,
wherein address information used to access said optical recording medium is used as said second digital information.

23. An optical recording medium having recorded thereon digital information for protecting copyright,
wherein a signal based on a plurality of sequences obtained by scrambling said digital information by using plurality of binary sequences is recorded.

24. An optical recording medium according to Claim 23,
wherein said digital information is recorded as wobble information of a groove by performing radiation control of a laser beam or an electronic ray by using a modulation signal based on an integration signal such that computation results of a plurality of binary sequences and a plurality of bits associated with said digital information are integrated.

25. An optical recording medium according to Claim 23,
wherein said plurality of binary sequences are M sequences.

26. An optical recording medium according to Claim 24,
wherein said integration signal is a signal which is integrated by selecting and adopting said plurality of computation results in accordance with a random number or pseudo-random number sequence.

27. An optical recording medium according to Claim 24,
wherein said integration signal is a multi-valued signal such that said plurality of computation results are added.

28. An optical recording medium according to Claim 23,
wherein information encrypted using said digital information is recorded.

29. An optical recording medium according to Claim 24,
wherein a second modulation signal obtained by modulating second digital information is superposed onto a modulation signal based on said integration signal, and the signal, together with said digital information for protecting copyright, is recorded as said wobble information of a groove.

30. An optical recording medium according to Claim 29,
wherein said second modulation signal is superposed onto a modulation signal based on said integration signal by frequency multiplexing.

31. An optical recording medium according to Claim 29,
wherein said second digital information is address information used for accessing data.

32. An information processing apparatus for recording or playing back information by using an optical recording medium having recorded thereon digital information for protecting copyright,
wherein said digital information is reconstructed by performing correlation computation between a binary sequence and a played back signal associated with said optical recording medium by using a plurality of binary sequences, which are the same as those used to scramble the information when said digital information is recorded.

33. An information processing apparatus that uses an optical recording medium in which digital information for protecting copyright is recorded as a wobble of a groove and that records or plays back information by radiating a laser beam or an electronic ray onto the optical recording medium according to Claim 32, said information processing apparatus comprising:
wobble detection means for detecting said groove wobble in order to generate a wobble signal;
synchronization detection means for detecting a synchronization timing from said wobble signal;
binary-sequence generation means for generating a binary sequence in accordance with said synchronization timing; and
decryption means for decrypting said digital information by integrating said wobble signal while performing a computation with said binary sequence.

34. An information processing apparatus according to Claim 32,
wherein said plurality of binary sequences are M sequences.

35. An information processing apparatus according to Claim 33,
wherein said wobble detection means is push-pull detection means for detecting a push-pull signal.

36. An information processing apparatus according to Claim 33,
wherein said synchronization detection means is address detection means for detecting address information used to access an optical recording medium.

37. An information processing apparatus according to Claim 33, comprising:
a plurality of integration means for integrating each of computation results of the exclusive OR of a plurality of binary sequences, which are generated by said plurality of binary-sequence generation means and which differ for each other, and said wobble signal, wherein a plurality of bits associated with said digital information are detected concurrently.

38. An information processing apparatus according to Claim 32, comprising:
encryption means for encrypting and recording information to be recorded on said optical recording medium by using said digital information.

39. An information processing apparatus according to Claim 32, comprising:
encryption unscrambling means for unscrambling encryption performed on the recording information of said optical recording medium by using said digital information.
